# EUROPEAN PATENT APPLICATION

(11) **EP 3 300 643 A1**
(43) Date of publication of application: **04.04.2018**
(21) Application number: 17193330.2
(22) Date of filing: 26.09.2017
(51) Int. Cl.: A47J 42/50

(54) **IMPROVED ELECTRIC COFFEE GRINDER**

(30) Priority: 30.09.2016 IT 201600098267
(71) Applicant: Conti Valerio - S.R.L., 50019 Sesto Fiorentino (FI) (IT)
(72) Inventor: ALBANESE, UGO, 50127 FIRENZE (IT)
(74) Representative: Baldi, Claudio

(57) **Abstract**

An electric coffee grinder (100) comprises: a hopper (1), a grinding compartment (2) disposed under said hopper (1), a grinding assembly (3), pushing means (5) disposed in the mouth of the grinding compartment (2) and joined to actuation means (31) of the grinding assembly (3), in such a way to push the coffee beans from the hopper (1) to the grinding compartment (2); the pushing means (5) consist in a disk (50) provided with a peripheral notch (55) to let the coffee bean pass through, and a tab (51) obtained along the profile of said notch (55) and inclined towards the hopper (1), which is suitable for pushing the coffee beans towards the grinding compartment (2) during the rotation of the disk (50).

## Description

The present patent application for industrial invention relates to an improved electric coffee grinder. The field of reference is the instantaneous grinding of coffee beans by means of a coffee grinder.

As it is known, traditional electric coffee grinders comprise a hopper disposed in upper position and a grinding compartment in lower position, which is connected to the hopper.

The electric coffee grinders of the prior art are provided with a grinding assembly having a blade disposed inside the grinding compartment and actuated by means of actuation means. The blade is usually provided with an axis of vertical rotation. Normally, the actuation means have an electric motor with a shaft for motion transmission, whereon the blade is splined.

The ground coffee comes out of the grinding compartment by means of an outlet in communication with the exterior.

In said electrical coffee grinders of the prior art, the coffee beans fall from the hopper into the grinding compartment by gravity, and this fact is the cause of considerable drawbacks.

A first drawback consists in the fact that the grinding and supply process of the coffee is a time-consuming process because the coffee beans descend slowly from the hopper to the grinding compartment.

A second drawback consists in the fact that it is impossible to estimate and adjust the quantity of coffee beans passing from the hopper to the grinding compartment. In fact, the number of coffee beans that are ground from time to time is random. In view of the above, the dose of ground coffee that comes out of the outlet will be different from time to time.

A third drawback consists in the fact that the grinding performance is not constant, and changes according to the filling level of the hopper. In fact, when the quantity of coffee beans contained in the hopper changes, the weight of the coffee applied on said blade will change, too. In particular, the higher the mass of coffee in the hopper, the higher the quantity of coffee beans that is spontaneously poured from the hopper into the grinding compartment will be. Therefore, with the same grinding time, the flow of ground coffee is in direct proportion to the load of the hopper.

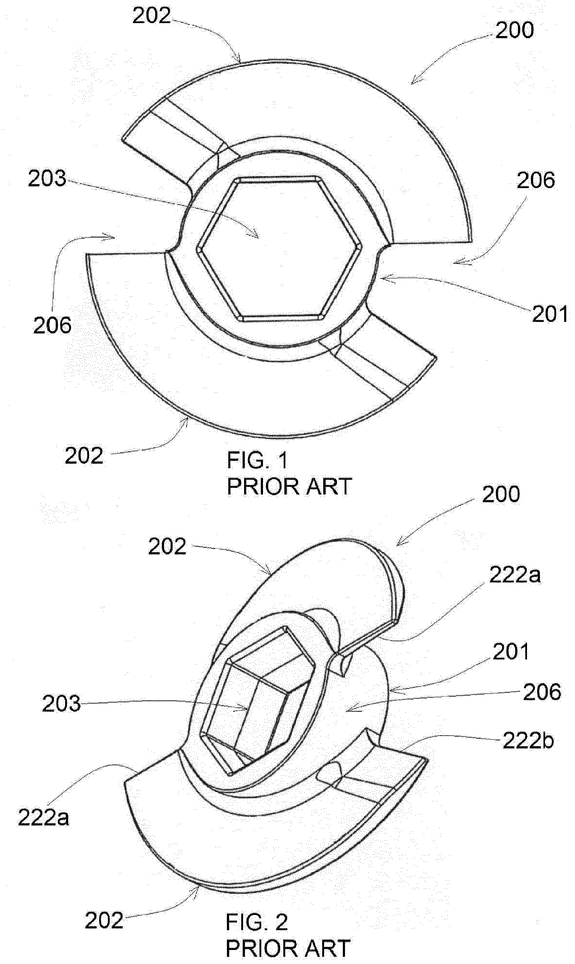

The aforementioned drawbacks have been at least partially solved in the electric coffee grinders of the prior art with the introduction of pushing means, which are shown in Figs. 1 and 2 with reference numeral 200. The pushing means (200) are disposed between the hopper and the grinding compartment and are actuated by the same shaft that drives the blade into rotation.

With reference to Figs. 1 and 2, the pushing means (200) are shaped as a conveyor screw, comprising a hub (201) with a hexagonal hole (203), for the prismatic coupling with the shaft of said electric motor. Alternatively, the hole may have a different shape and may be coupled with the shaft of the electric motor by means of suitable fixing means.

The conveyor screw comprises two blades (202), each of them having a planar surface equal to a sector of an annulus and is inclined with respect to the orthogonal plane to the axis of rotation of the conveyor screw. In view of the above, during the rotation of said conveyor screw, the blades (202) push the coffee beans towards the grinding compartment. Said planar surface of each blade (202) extends for an angle that is lower than a semi-circumference, so that between the sharp leading edge (222a) of a blade (202) and the outlet edge (222b) of the other blade (202) an empty space sector (206) is provided, putting the hopper in direct communication with the grinding compartment.

Said pushing means (200) allow to adjust the flow of coffee beans passing from the hopper to the grinding compartment and to maintain a high constant pressure on the coffee beans, regardless of the quantity of coffee beans contained in the hopper.

Moreover, the pushing means (200) increase the flow of coffee beans into the grinding compartment, reducing the time needed to grind a coffee dose.

However, said pushing means (200) are impaired by the fact that they can break the coffee beans, especially when the speed of said conveyor screw is significantly increased in order to increase the flow of the grinding compartment. In the latter case, it has been noted that the coffee beans are broken even before they reach the blades. In addition to an incorrect cutting process of the blade, this results in the presence of residues in the hopper, where the residues and the powder of the broken beans remain.

Experimental tests have shown that, in order to avoid breaking the coffee beans, the shaft of the motor that drives said conveyor screw and said blade into rotation must not exceed the speed of 600 rpm. The limitation of the speed to said threshold value can be applied in coffee grinders with conical blades, but not in coffee grinders with flat blades. In fact, it must be noted that in order to guarantee an acceptable productivity, the flat blades must be actuated at a speed higher than 600 rpm, usually approximately 900 rpm. For this reason, said pushing means (200) cannot be used with coffee grinders provided with flat blades, because the rotational speed of the motor shaft cannot be increased as desired, without breaking the coffee beans.

On the contrary, conical blades have a higher productivity than the flat blades, and are therefore actuated at a speed lower than 600 rpm. Consequently, the pushing means (200) of the prior art can be used in coffee grinders with conical blades. On the other hand, the productivity of the coffee grinder with conical blades cannot be improved by increasing the rotational speed of the motor shaft as desired, because the coffee beans are broken when the threshold value of the rotational speed is exceeded.

The productivity of the coffee grinder can be increased by overdimensioning the pushing means (200), i.e. by increasing the inclination of the blades (202) of the conveyor screw. Such an overdimensioning generates an excessive flow of coffee beans inside the grinding compartment, which may interfere with the regular rotation of the blades, causing the jamming of the entire grinding assembly and the failure of the electric motor.

On the contrary, when underdimensioned, the pushing means (200) cannot guarantee a correct flow of coffee beans from the hopper to the grinding compartment, thus vanishing the advantages of using the pushing means of known type.

DE202010008642 discloses an electric coffee bean grinder comprising a container, suitable for containing coffee beans, a grinding compartment and a motor-driven screw conveyor for delivering coffee beans from the container towards the grinding compartment.

The purpose of the present invention is to remedy the drawbacks of the prior art by disclosing an electric coffee grinder provided with pushing means that can rotate at high speed without breaking the coffee beans and without causing the jamming of the grinding compartment because of the excessive flow of coffee beans.

Another purpose is to disclose an electric coffee grinder provided with pushing means that are reliable, easy to make and assemble, and that can be used with both conical and flat blades.

An electric coffee grinder according to the invention traditionally comprises a hopper and a grinding compartment disposed under the hopper and in communication with it. The ground coffee flows out of the coffee grinder by means of an outlet that comes out of the grinding compartment.

The coffee grinder also comprises a grinding assembly that comprises a blade disposed inside said grinding compartment, and actuation means connected to the blade to actuate the blade.

The coffee grinder comprises pushing means that are disposed in the mouth of said grinding compartment and joined to the actuation means, in such manner to push the coffee beans from the hopper to the grinding compartment.

The peculiarity of the coffee grinder according to the invention consists in the fact that said pushing means consist in a disk that is provided with a central hub and with a peripheral notch to let the coffee beans pass through. The disk comprises a tab obtained along the profile of said notch and inclined towards the hopper, which is suitable for pushing the coffee beans towards the grinding compartment during the rotation of the disk.

Because of the special shape of said peripheral notch and of the tab, the coffee beans can be pushed towards the grinding compartment, without breaking them.

For the sake of clarity, the description of the coffee grinder according to the invention continues with reference to the attached drawings, which have a merely illustrative, not limiting value, wherein:
Fig. 1 is a top view of pushing means according to the prior art;
Fig. 2 is an axonometric view of the pushing means of Fig. 1;
Fig. 3 is an axonometric view of a coffee grinder according to the invention, wherein a portion of an external wall has been removed in correspondence of a grinding assembly;
Fig. 4 is a sectional view along plane IV-IV of the coffee grinder of Fig. 3;
Fig. 5 is an axonometric top view of the grinding assembly of the coffee grinder of Fig. 3;
Fig. 6 is a top view of the pushing means of the coffee grinder of Fig. 3;
Fig. 7 is an axonometric view of the pushing means of Fig. 6.

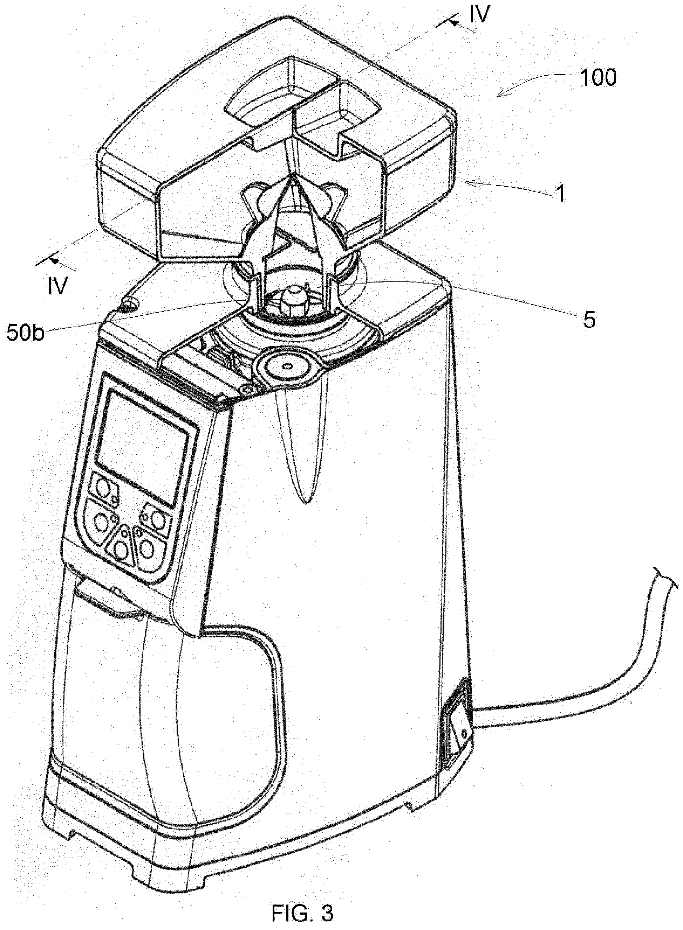

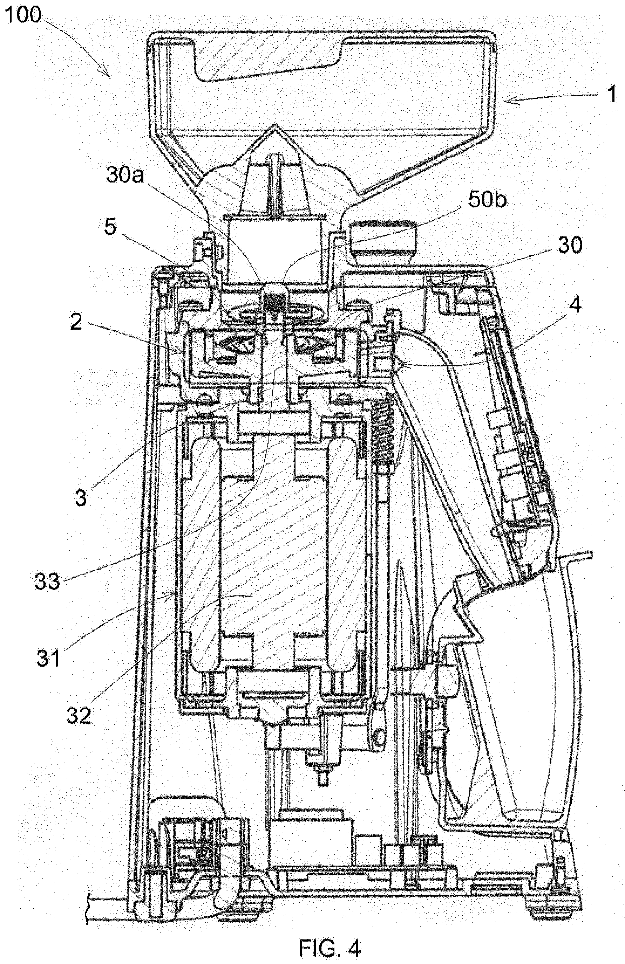

With reference to Figs. 3, 4 and 5, an electric coffee grinder according to the invention is disclosed, which is generally indicated with reference numeral (100).

The electric coffee grinder (100) comprises a hopper (1) and a grinding compartment (2) disposed under the hopper (1) and in communication with it.

The coffee grinder (100) also comprises a grinding assembly (3) that comprises a blade (30) disposed inside the grinding compartment (2), and actuation means (31) connected to the blade (30) to actuate the blade (30). The actuation means (31) comprise an electric motor (32) disposed under the grinding compartment (2), and a vertical shaft (33) that enters the grinding compartment (2) from below. The blade (30) is splined on the shaft (33), in such a way to rotate together with the shaft (33).

The coffee grinder (100) comprises an outlet mouth (4) from the grinding compartment (2) to let the ground coffee flow out of the coffee grinder (100).

The coffee grinder (100) also comprises pushing means (5) disposed in the mouth of said grinding compartment (2) and splined on the shaft (33) of the actuation means in such manner to rotate jointly with said shaft (33).

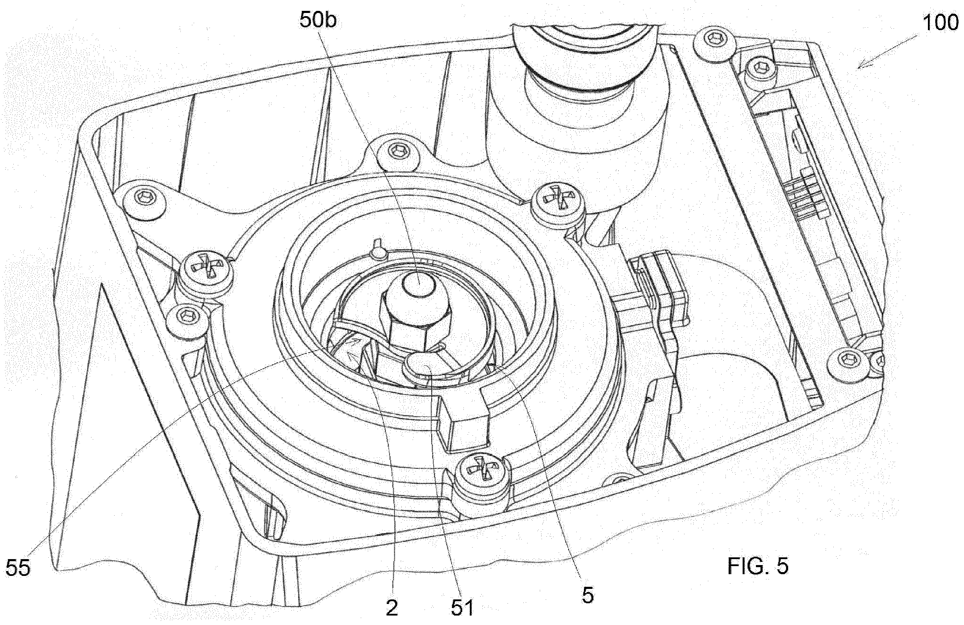

The pushing means (5) consist in a disk (50), preferably made of plastic material. The disk (50) is disposed horizontally and comprises a central hub (50a) for coupling with the shaft (33). Advantageously, said shaft (33) ends with a threaded upper section (30a), shown in Fig. 3, which is suitable for being inserted into the hub (50a) of the disk (5) and for being helically coupled with a nut (50b) to tighten the disk (50) on the shaft (33), as shown in Figs. 3 and 5.

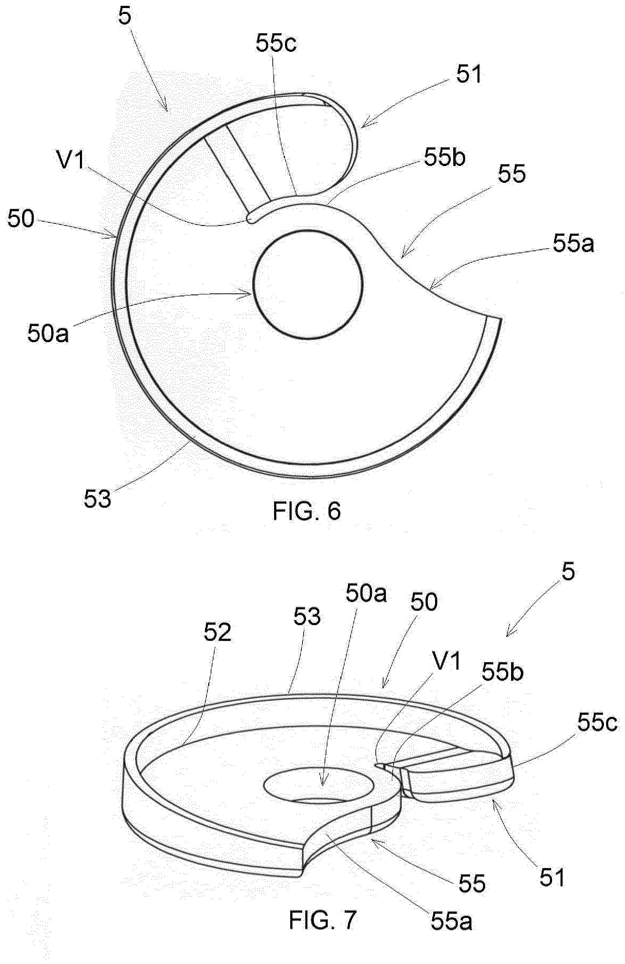

As shown in Fig. 6 and 7, the disk (50) has a peripheral notch (55) with a curvilinear profile, through which the coffee beans pass from the hopper (1) to the grinding compartment (2). The disk (50) comprises a tab (51) obtained along the profile of said notch (55) and inclined upwards, i.e. towards the hopper (1), in such a way to push the coffee beans under the disk (50), i.e. towards the grinding compartment (2) during the rotation of the disk (50).

The notch (55) has a substantially V-shaped profile that comprises a first long section (55a), a second short section (55c) and a vertex (V1) that joins said first section (55a) with said second section (55c) and is positioned in proximity to the hub (50a). The first section (55a) has a sinusoidal profile and is concentric to the hub (50a) in correspondence of its section (55b) that converges towards the vertex (V1) of said V-shaped notch (55). Said tab (51) with a curvilinear U-shaped profile is obtained on the second section (55c) of said V-shaped notch (55).

In particular, it must be noted that the edges of said V-shaped notch (55), including the ones of said U-shaped tab (51), all have a curvilinear shape. For this reason, the impact of the coffee beans with said profile does not determine the breaking of the coffee beans during the rotation of the disk (50), including for rotational speeds of the disk (50) higher than 600 rpm. In view of the above, the pushing means (5) according to the invention can be used both with conical blades and flat blades that require a rotational speed higher than 600 rpm.

The V-shaped notch (55) lets the coffee beans travel back towards the hopper (1) in case of an excessive flow of coffee towards the grinding compartment (2), in such away to prevent the risk of jamming the blade (30) and stopping the shaft (33) of the electric motor (32) because of an excessive resistant load.

The perimeter edge (52) of said disk (50) is stiffened by means of a circular rib (53) that runs above said edge (52) and is interrupted in correspondence of said V-shaped notch (55).

By rotating together with the shaft (33), the disk (50) pushes the coffee beans downwards. In particular, the V-shaped notch (55) lets the coffee beans pass from the hopper (1) to the grinding compartment (2), whereas the U-shaped tab (51) intercepts and pushes downwards the coffee beans that are temporarily situated inside said V-shaped notch (55).

## Claims

1. Electric coffee grinder (100) comprising:
- a hopper (1);
- a grinding compartment (2) disposed under said hopper (1) and in communication with it;
- a grinding assembly (3) that comprises a blade (30) disposed inside the grinding compartment (2), and actuation means (31) connected to said blade (30) to actuate said blade (30);
- an outlet mouth (4) from the grinding compartment (2) to let the ground coffee flow out of the coffee grinder (100);
- pushing means (5) disposed in the mouth of said grinding compartment (2) and joined to said actuation means (31) in such manner to push the coffee beans from the hopper (1) to the grinding compartment (2);
**characterized in that** said pushing means (5) consist in a disk (50) provided with a peripheral notch (55) to let the coffee beans pass through and a tab (51) obtained along the profile of said notch (55) and inclined towards the hopper (1), which is suitable for pushing the coffee beans towards the grinding compartment (2) during the rotation of the disk (50).

2. The coffee grinder (100) of claim 1, wherein said notch (55) has a curvilinear profile.

3. The coffee grinder (100) of claim 2, wherein said notch (55) has a "V"-shaped profile and comprises:
- a first curvilinear section (55a);
- a second section (55c) wherein said tab (51) is obtained;
- a vertex (V1) that joins said first section (55a) with said second section (55c).

4. The coffee grinder (100) of claim 3, wherein said vertex (V1) is positioned in proximity to the hub (50a).

5. The coffee grinder (100) of claim 4, wherein said first section (55a) is concentric to the hub (50a) in correspondence of its section (55b) converging towards the vertex (V1) of said notch (55).

6. The coffee grinder (100) of any one of the preceding claims, wherein said tab (51) has a "U"-shaped curvilinear profile.

7. The coffee grinder (100) of any one of the preceding claims, wherein said disk (50) comprises a perimeter edge (52) stiffened by means of a circular rib (53) that runs above said edge (52) and is interrupted in correspondence of said notch (55).

8. The coffee grinder (100) of any one of the preceding claims, wherein said actuation means (31) comprise an electric motor (32) with a shaft (33) ending with a threaded upper section (30a), which is suitable for being inserted into the hub (50a) of the disk (5) and for being helically coupled with a nut (50b) to tighten the disk (50) on the shaft (33).

9. The coffee grinder (100) of any one of the preceding claims, wherein said disk (50) is made of plastic material.
